# EUROPEAN PATENT SPECIFICATION

(11) **EP 2 810 788 B1**
(45) Date of publication and mention of the grant of the patent: **02.10.2019**
(21) Application number: 12867332.4
(22) Date of filing: 27.12.2012
(51) Int. Cl.: B60B 27/02, B60B 27/00, B60B 1/04, B60B 9/00

(54) **BICYCLE HUB UNIT**
FAHRRADNABENEINHEIT
DISPOSITIF DE MOYEUX POUR AUTOMOBILE

(30) Priority: 03.02.2012 JP 2012021483
(43) Date of publication of application: 10.12.2014
(73) Proprietor: Kondo Machine Co. Ltd, Ama-gun, Aichi 497-0048 (JP)
(72) Inventor: KONDO, Yutaka, Ama-gun, Aichi 497-0048 (JP)
(74) Representative: White, Duncan Rohan
(86) International application number: PCT/JP2012/083873
(87) International publication number: WO 2013/114779

(56) References cited:
- EP-A1- 0 104 216
- WO-A1-2011/129027
- DE-A1- 19 621 122
- JP-A- H06 219 101
- JP-A- H06 219 101
- JP-A- 2006 001 546
- JP-A- 2012 144 136
- JP-U- H03 118 802
- US-A1- 2011 227 401
- US-A1- 2011 227 401

## Description

### Technical Field

The present invention relates to a hub for bicycle, and more particularly, the present invention relates to a hub unit for bicycle, which serves to transmit the load input from the wheel via a spoke to a shaft side, and allows the wheel to smoothly rotate around the shaft.

### Background Art

Japanese Unexamined Patent Application Publication No. 2006-1546 discloses related art as described above, which is structured to input the load from the tire, rim and the like to the hub via the spoke, transmit the input load to the shaft via a cylindrical bearing holder and a ball bearing provided therein, and receive the load from the tire and the rim so as to smoothly rotate the wheel formed based on the hub around the shaft.

### Citation List

### Patent Literature

Patent Literature: Japanese Unexamined Patent Application Publication No. 2006-1546. JP H06 219101 (A) describes an apparatus for improving the strength of spokes and the rigidity of a wheel against a lateral directional load.

### Summary of Invention

### Technical Problem

The structure around the hub mechanism of the related art as described above is provided at the center of the wheel, and includes a hub to which a spoke is attached, and a cylindrical bearing holder provided inside the hub, which has bearing retainers at both ends. An angular contact ball bearing is provided at each of the bearing retainers formed at both ends of the bearing holder. Such structure that contains the bearing holders inside is provided so as to be rotatable around the shaft via the bearing. The related art is configured to transmit the load from the wheel side to the bearing via the bearing holder, and further to the shaft. An additional component is attached to the area around the hub. It is an object (target) of the present invention to provide a simply configured hub unit for bicycle without requiring any additional component as described above. Solution to Problem

In order to solve the aforementioned problem, we will provide the following solution. According to a first invention described in Claim 1, a hub unit for bicycle for supporting a rotating motion of a wheel, and transmitting a load from a tire side that forms the wheel to a shaft side includes a hub as a base part formed of a toric spoke mount portion to which one end of a spoke is attached, a cylindrical body that is formed at a center of the wheel, and has its both ends provided with bearing holders, and fingers each with a predetermined width radially cantilevered parallel to an axial direction of the cylindrical body on an outer circumference of the body, and have tip ends integrally connected to the toric spoke mount portions.

According to a second invention described in Claim 2 in addition to the hub unit for bicycle of Claim 1, the fingers that form the hub are arranged at predetermined intervals parallel to an axial direction of the cylindrical body to which one of end portions of each finger is connected.

According to a third invention described in Claim 4 in addition to the hub unit for bicycle of Claims 1 to 3, the spoke mount portion, the body, and the fingers are integrally formed by using a predetermined metal that contains an aluminum (Al) alloy
or a titanium (Ti) alloy, or a carbon-fiber reinforced plastic (CFRP) material.

### Advantageous Effects of Invention

The first invention described in Claim 1 will be explained. The invention is configured as described above to release the load input from the tire side at the finger, and to ensure that the impact force from the tire side is not transmitted to the bearing side. In other words, the spoke to which the impact load or the like is input from the tire side has one end attached to a toric spoke mount portion. The impact load input to the spoke mount portion via the spoke may be alleviated through deflection of the fingers cantilevered on the cylindrical body. The alleviated load is transmitted to the cylindrical body, and further to the bearing. The load is finally received by the shaft. As a result, the unit according to the present invention allows the load input to the shaft is kept alleviated when the impact load is input to the tire or the like for forming the wheel. The wheel is then allowed to constantly keep the smooth rotating motion around the shaft as the axis.

The second invention described in Claim 2 provides the following advantageous effect in addition to that of the first invention. Specifically, the fingers are provided on the outer circumference of the cylindrical body at equal intervals so as to form gaps between adjacent fingers at equal intervals. Accordingly, the respective fingers function as cooling fins. Especially, each tip end of the fingers has a toric (discoidal) spoke mount portion integrally formed therewith, thus further enhancing the cooling effect coupled with the discoidal spoke mount portion. This makes it possible to improve durability of the bearings provided at both ends of the cylindrical body through enhancement of the cooling effect.

The aforementioned structure according to the third invention described in Claim 3 releases the input load from the tire side at the cylindrical portion so as to ensure that the impact force from the tire side is not transmitted to the bearing side. That is, the spoke to which the impact load or the like is input from the tire side has its one end attached to the toric spoke mount portion. Then the impact load or the like input to the spoke mount portion via the spoke will be alleviated through deflection of the cylindrical portion provided outside the cylindrical body. The alleviated load is transmitted to the cylindrical body, and further to the bearing. The load is finally received by the shaft. As a result, the structure according to the invention keeps the load input to the shaft in the alleviated state irrespective of the impact load input to the tire and the like for forming the wheel. The wheel is allowed to constantly keep the smooth rotating motion around the shaft as the axis.

The hub for bicycle according to the fourth invention described in Claim 4 is provided by integrally forming components formed of a predetermined metal, for example, A1 alloy or Ti alloy, or a carbon fiber reinforcement plastic material, thus reducing the overall weight or manufacturing costs. In other words, the present invention provides a hub unit for bicycle that ensures reduction of the weight or manufacturing costs.

### Brief Description of Drawings

FIG. 1 is a developed perspective view of an overall structure of the present invention.
FIG. 2 is a longitudinal sectional view of an overall structure of the present invention.
FIG. 3 illustrates a finger which is deformed under the load input to the hub unit according to the present invention.
FIG. 4 illustrates a structure of the hub around the fingers according to the present invention, and a cross-sectional shape of the structure.
FIG. 5 illustrates an overall structure according to the present invention, which has a large number of fingers, and a cross-sectional shape of the structure.
FIG. 6 illustrates an overall structure according to the present invention, which has a small number of fingers, and a cross-sectional shape of the structure.
FIG. 7 illustrates an overall structure of a solid cylindrical portion formed outside the cylindrical body in place of the fingers, and a longitudinal sectional shape of the structure.

### Description of Embodiments

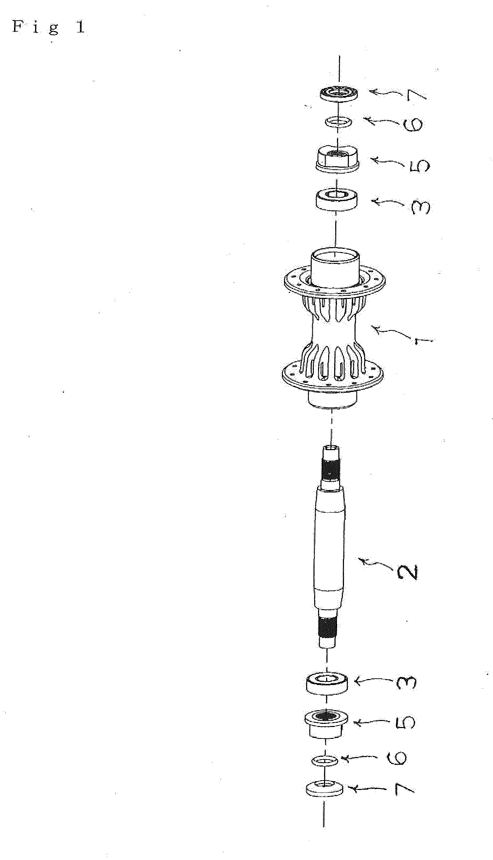

An embodiment for carrying out the present invention will be described referring to FIGS. 1 to 7. As FIG. 1 shows, a hub unit for bicycle according to the embodiment receives the load from the wheel, and supports the wheel so as to be rotatably operated. Specifically, the hub unit is mainly formed of a hub 1 that includes a body 15 having a cylindrical shape, and discoidal spoke mount portions 12 provided substantially at both ends of the body 15 as a base at right angles thereto.

A shaft 2 is provided at the center of the cylindrical body 15 of the above-structured hub 1 so as to rotatably support the entire hub unit for bicycle, and provided with bearings 3,3 at both ends. Spherical nuts 5,5 are provided at surfaces of each one end of the bearings 3,3, respectively, which serve to fix the bearings 3,3 to the respective terminal ends of the shaft 2. The hub unit for bicycle is assembled by attaching (tightening) those spherical nuts 5,5. O-rings 6,6 and spherical washers 7,7 are provided outside the spherical nuts 5,5, respectively, through which the wheel with the hub unit for bicycle is attached to the spoke (not shown).

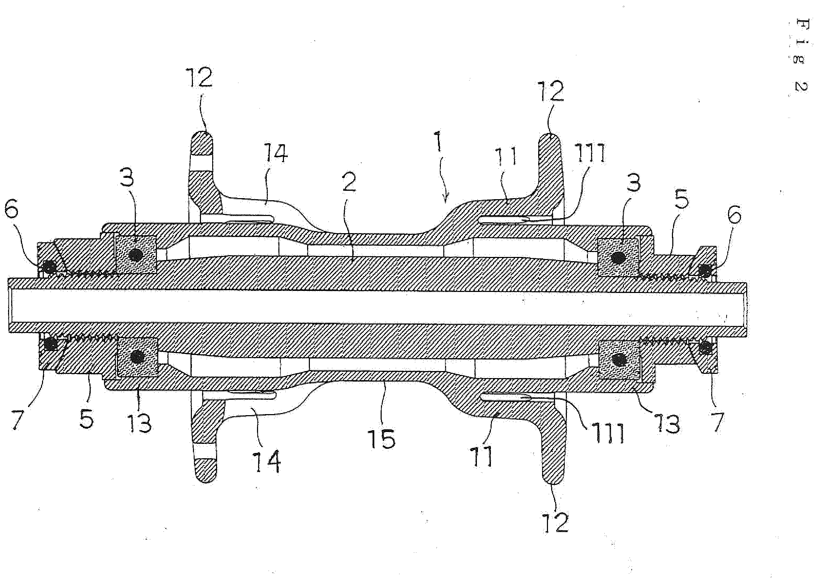

The specific structure of the hub 1 as a base of the above-structured hub unit for bicycle will be specifically described referring to FIG. 2. Basically, the hub includes the cylindrical body 15, a plurality of fingers 11 each having a predetermined width, which are radially formed on the outer circumference of the body 15 at equal intervals, and cantilevered parallel to the axial direction of the body 15, and discoidal spoke mount portions 12 that are integrally formed with the fingers 11 at each tip end thereof, and directed at right angles to the axis (center line) of the body 15.

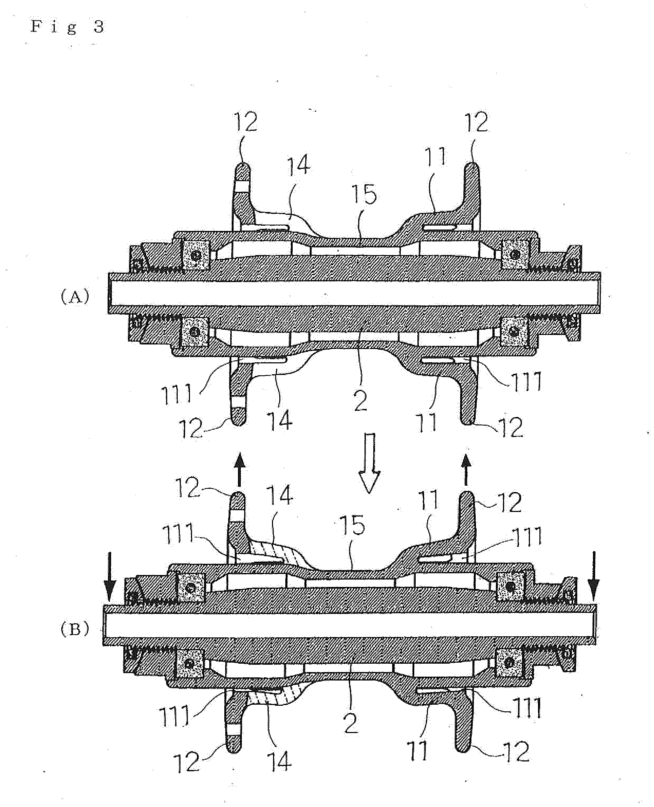

The aforementioned structure is configured to form a bearing holder 13 on an extension of the cylindrical body 15 at the internal diameter side of the finger 11 and the discoidal spoke mount portion 12. Furthermore, a gap 111 is formed between the bearing holder 13 and the inside of the finger 11. Referring to FIG. 3, when the load is input from the tire side to the spoke mount portion 12, the finger 11 sufficiently deflects to reduce the gap 111 as FIG. 3(B) shows. In other words, the gap 111 is formed to allow elastic deformation of the finger 11. The elastic deformation (deflection) of the finger 11 as described above ensures to constantly retain complete roundness of the area around the bearing holder 13 against the load input from the tire side. As a result, the bearings 3,3 are allowed to constantly keep smooth rotating motions.

The bearing holder 13, specifically, extension parts from both ends of the body 15 (see FIG. 3) allow attachment of the bearings 3,3 each as a ball bearing. Those bearings 3,3 are provided at an interval longer than the one between the spoke mount portions 12,12 as the load input parts so that each load input to the bearings 3,3 is smaller than the one input to the spoke mount portions 12,12. This makes it possible to protect the bearings 3,3. The wheel formed based on the hub 1 with the aforementioned structure is allowed to constantly keep the smooth rotating motion as a whole with respect to the shaft 2 as the center.

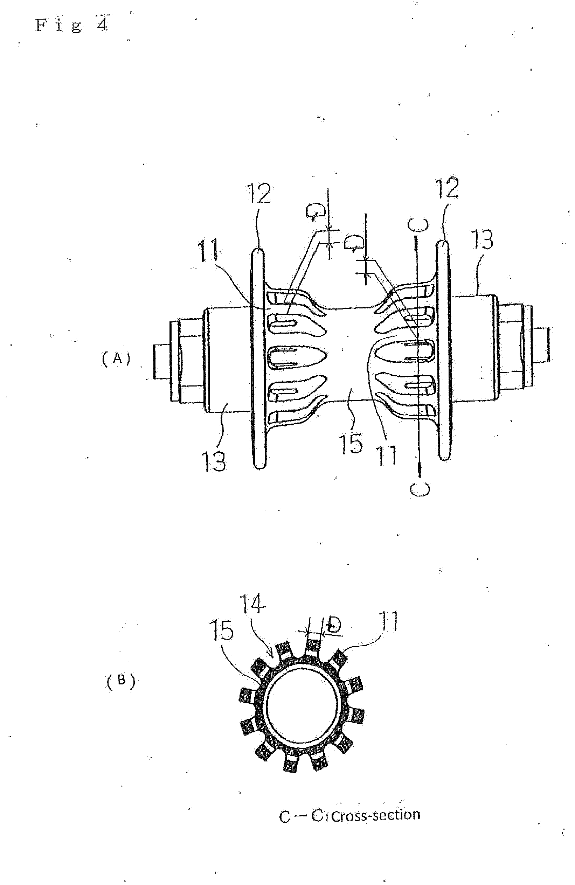

As FIGS. 2 to 4 show, a slit 14 with a predetermined width is formed between the above-structured fingers 11. That is, the cantilevered fingers 11 and the slits 14 are alternately formed circumferentially between the body 15 and the spoke mount portion 12 (see FIGS. 4 to 6). The space around the bearing holder 13 via the slit 14 and the gap 111 is communicated with the space defined by the body 15 and the spoke mount portions 12,12, respectively. Accordingly, when the wheel starts rotating, air at the space defined by the spoke mount portions 12,12 flows to the area around the bearing holder 13 via the slit 14 and the gap 111. At the same time, the flowing air serves to cool the fingers 11. This may cool the area around the bearing holder 13, and finally the bearings 3,3 which can be protected.

The structure having varied number of the fingers 11 as shown in FIGS. 4 to 6 will be studied. Referring to FIGS. 4A and 4B, basically, a plurality of fingers 11 are provided at equal intervals radially on the circumference of the body 15 between the body 15 and the spoke mount portion 12 as FIG. 4B shows. This structure allows the load (force) input to the spoke mount portion 12 via the spoke (not shown) to be transmitted to the body 15 via the cantilevered finger 11. The finger 11 is elastically deformed in accordance with the elastic modulus (flexural rigidity) against the input load so that the load is transmitted to the body 15, the bearing holder 13 and the bearing 3 while having the impact load input to the spoke mount portion 12 alleviated. The bearings 3,3 are allowed to smoothly rotate around the shaft 2.

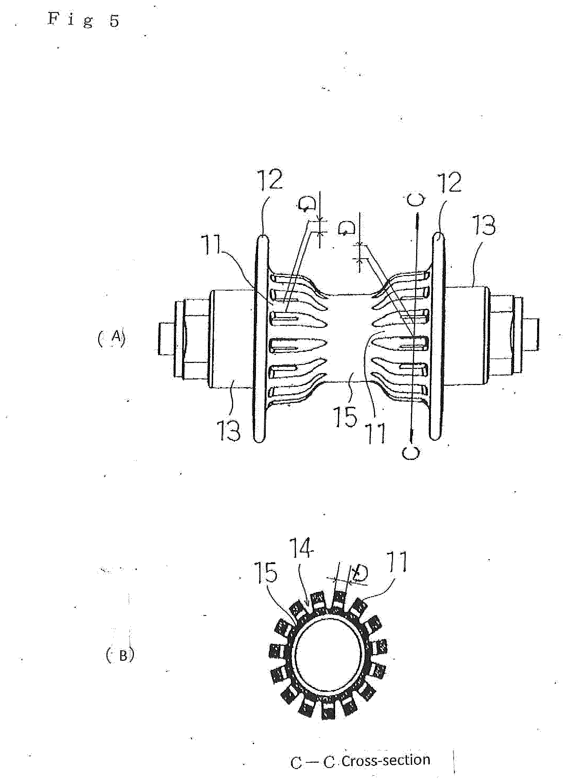

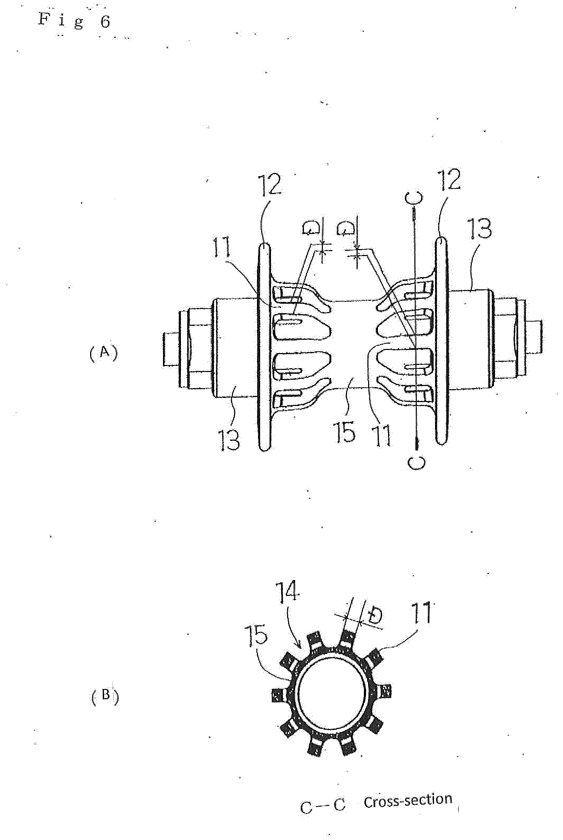

Referring to FIGS. 5A and 5B, the structure with increased number of fingers 11 will be described. In this case, the load (especially, impact load) input to the spoke mount portion 12 is further input to the body 15 through deflection of the finger 11, and transmitted from the bearings 3,3 to the body side. If the above-structured hub 1 is mounted on the wheel, the impact load will be transmitted to the body side in relatively a direct way. Then the impact force that is kept strong will be directly transmitted to the bicycle rider. Meanwhile, referring to FIGS. 6A and 6B, use of the reduced number of fingers 11 results in a smaller value of flexural rigidity of the cantilevered finger 11 as a whole. As a result, the finger 11 undergoes gentle elastic deformation (deflection) entirely. This may alleviate the impact load input to the spoke mount portion 12 at the finger 11 so as to be transmitted to the bearings 3,3 and further to the body side. In this way, appropriate adjustment of the number of fingers 11 ensures to set the elastic modulus of the finger in the optimum state while corresponding mainly to the occupant weight or the movable load, and further to the strength of the rider's legs.

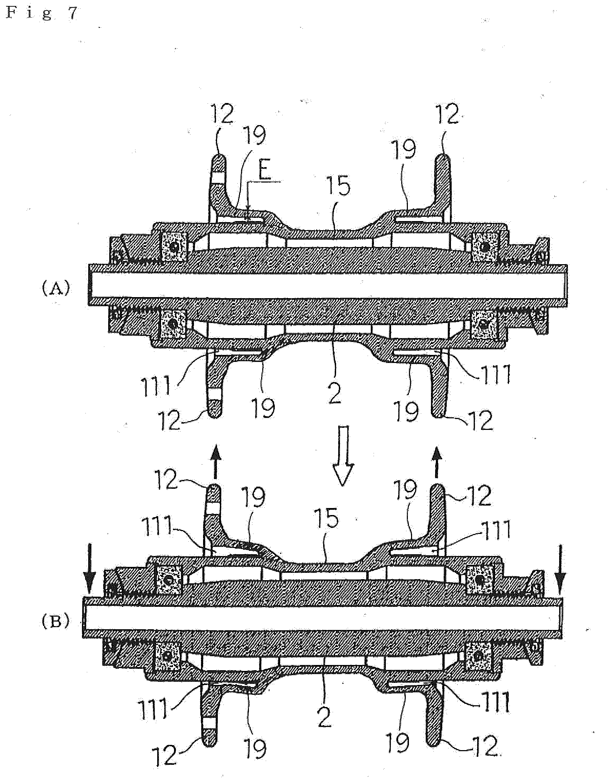

The structure with a circular cross-sectional shape may be produced by eliminating the slits 14 formed around the fingers 11 alternative to the aforementioned fingers 11. As FIG. 7 shows, the cylindrical body 15 is provided with a cylindrical portion 19 having a cylindrical shape at the outer circumference. Each tip end of the cylindrical portions 19 is vertically connected to the discoidal spoke mount portion 12. A thickness (E) of the cylindrical portion 19 is set to be smaller (thinner) than that of the peripheral member. Accordingly, the cylindrical portion 19 will undergo the deflection against the load input from the spoke mount portion 12 as shown in FIG. 7(B) so as to flexibly cope with the input load. Likewise the finger 11, the thickness (E) of the cylindrical portion 19 is arbitrarily set so as to correspond to the rider's weight or the movable load.

The hub 1 of the aforementioned structure allows the body 15, the fingers 11, the spoke mount portions 12, the cylindrical portions 19 and the like to be integrally formed by using the predetermined metal that contains Al alloy or Ti alloy. This makes it possible to improve overall strength and rigidity while reducing the overall weight of the hub 1. It is considered possible to integrally form the hub 1 as described above using the carbon fiber reinforced plastic (CFRP). This may further reduce the weight of the structure.

### Reference Signs List

- 1: hub

- 11: finger
- 111: gap
- 12: spoke mount portion
- 13: bearing holder
- 14: slit
- 15: body
- 19: cylindrical portion
- 2: shaft
- 3: bearing
- 5: spherical nut
- 6: O-ring
- 7: spherical washer

## Claims

1. A hub unit for bicycle for supporting a rotating motion of a wheel, and transmitting a load from a tire side that forms the wheel to a shaft side, which includes a hub (1) as a base part formed of a toric spoke mount portion (12) to which one end of a spoke is attached, a cylindrical body (15) that is formed at a center of the wheel, and is provided with bearing holders (13) at both ends of the cylindrical body (15), and fingers (11) each with a predetermined width radially cantilevered parallel to an axial direction of the cylindrical body (15) on an outer circumference of the cylindrical body (15), and having tip ends integrally connected to the toric spoke mount portion (12).

2. The hub unit for bicycle according to claim 1, wherein the fingers (11) that form the hub (1) are arranged at predetermined intervals.

3. The hub unit for bicycle according to claim 1 or 2, wherein the toric spoke mount portion (12) is integrally formed with the fingers (11) at each tip thereof, and at right angles to the axial direction of the cylindrical body (15).

4. The hub unit for bicycle according to claims 1 to 3, wherein the spoke mount portion (12), the cylindrical body (15), and the fingers (11)are integrally formed by using a predetermined metal that contains an aluminum (Al) alloy or a titanium (Ti) alloy, or a carbon-fiber reinforced plastic (CFRP) material.

## Patentansprüche

1. Nabeneinheit für ein Fahrrad zum Unterstützen einer Drehbewegung eines Rades und Übertragen einer Last von einer Reifenseite, die das Rad bildet, auf eine Wellenseite, die eine Nabe (1) als Basisteil, die aus einem torischen Speichenbefestigungsabschnitt (12) gebildet ist, an dem ein Ende einer Speiche angebracht ist, einen zylindrischen Körper (15), der in der Mitte des Rades gebildet ist und an beiden Enden des zylindrischen Körpers (15) mit Lagerhaltern (13) versehen ist, und Finger (11) mit jeweils einer vorbestimmten Breite, die radial parallel zu einer Axialrichtung des zylindrischen Körpers (15) an einem Außenumfang des zylindrischen Körpers (15) auskragend sind, einschließt, und der Spitzenenden aufweist, die einstückig mit dem torischen Speichenbefestigungsabschnitt (12) verbunden sind.

2. Nabeneinheit für ein Fahrrad nach Anspruch 1, wobei die Finger (11), die die Nabe (1) bilden, in vorbestimmten Intervallen angeordnet sind.

3. Nabeneinheit für ein Fahrrad nach Anspruch 1 oder 2, wobei der torische Speichenbefestigungsabschnitt (12) einstückig mit den Fingern (11) an jeder Spitze davon und im rechten Winkel zur Axialrichtung des zylindrischen Körpers (15) gebildet ist.

4. Nabeneinheit für ein Fahrrad nach den Ansprüchen 1 bis 3, wobei der Speichenbefestigungsabschnitt (12), der zylindrische Körper (15) und die Finger (11) einstückig unter Verwendung eines vorbestimmten Metalls ausgebildet sind, das eine Aluminium (Al)-Legierung oder eine Titan (Ti)-Legierung oder einen kohlenstofffaserverstärkten (CFK) Kunststoff enthält.

## Revendications

1. Unité de moyeu pour vélo destinée à supporter un mouvement de rotation d'une roue et à transmettre une charge du côté du pneu qui forme la roue au côté de l'arbre, laquelle comprend un moyeu (1) en tant que partie de base formée d'une partie de support à rayons toriques (12) à laquelle est attachée une extrémité d'un rayon, un corps cylindrique (15) formé au centre de la roue et muni de supports de roulement (13) aux deux extrémités du corps cylindrique (15), et des doigts (11) ayant chacun une largeur prédéterminée, radialement en porte à faux parallèlement à une direction axiale du corps cylindrique (15) sur une circonférence extérieure du corps cylindrique (15), et ayant des extrémités de pointe reliées de manière intégrée à la partie de montage de rayon torique (12).

2. Unité de moyeu pour vélo selon la revendication 1, dans laquelle les doigts (11) qui forment le moyeu (1) sont disposés à des intervalles prédéterminés.

3. Unité de moyeu pour vélo selon la revendication 1 ou 2, dans laquelle la partie de montage de rayon torique (12) est intégralement formée avec les doigts (11) à chaque extrémité de celle-ci et perpendiculairement à la direction axiale du corps cylindrique (15).

4. Unité de moyeu pour vélo selon les revendications 1 à 3, dans laquelle la partie de montage de rayon (12), le corps cylindrique (15) et les doigts (11) sont intégralement formés en utilisant un métal prédéterminé contenant un alliage d'aluminium (Al) ou un alliage de titane (Ti) ou un matériau en plastique renforcé de fibres de carbone (PRFC).
